# EUROPEAN PATENT APPLICATION

(11) **EP 4 306 266 A1**
(43) Date of publication of application: **17.01.2024**
(21) Application number: 23181746.1
(22) Date of filing: 27.06.2023
(51) Int. Cl.: B25F 5/02, H01M 50/244, H01M 50/247, H01M 50/262

(54) **BATTERY DEVICE AND WORKING ASSEMBLY HAVING BATTERY DEVICE**

(30) Priority: 12.07.2022 CN 202210821101
(71) Applicant: Techtronic Cordless GP, Anderson, SC 29621 (US)
(72) Inventor: LIU, Ya Bin, Dongguan City (CN); ZHAO, Jiang, Dongguan City (CN); ZHAO, Jian Guo, Dongguan City (CN)
(74) Representative: Meissner Bolte Partnerschaft mbB

(57) **Abstract**

The present invention provides a battery device and a working assembly having the battery device. The battery device comprises a locking component, an operation component and a transmission mechanism. The locking component can engage with or disengage from a working device. The operation component is spaced apart from the locking component and can be actuated by an operator. The transmission mechanism is configured to transmit a motion of the operation component to the locking component when the operation component is actuated, and the transmission mechanism comprises at least two connecting rods which are sequentially connected to each other in a force transmission direction. The present invention can satisfy the needs for long-distance transmission of motion between an actuating component and the locking component. In addition, force-exerting and force-receiving components in the force transmission chain all have sufficient rigidity and are not easy to deform and not prone to wobbling, thus ensuring the stability of force transmission and also avoiding the possibility of damage caused by deformation of the force-exerting and force-receiving components under the action of force.

## Description

### Technical field

The present invention relates to the field of batteries, and in particular to a battery device and a working assembly having the battery device.

### Background art

At present, battery devices for powering a working device available on the market are generally provided with a locking structure configured to engage with or disengage from the working device. The locking structure is driven by a switch, and usually directly abuts the switch. When the switch is pressed and actuated, the locking structure is driven to move so as to disengage from the working device. However, for battery devices with a relatively large size, such an arrangement may cause some problems.

For example, in order to satisfy the needs for a relatively large force transmission distance between the locking structure and the switch, the engagement portion of the switch and the locking structure may also have a correspondingly long length, so that when the switch is actuated, the switch and/or the locking structure having a relatively long size may tend to wobble during movement, resulting in less stable transmission of force. Moreover, an excessively long arm of the switch and/or the excessively long locking structure may bend under force, which not only fails to achieve transmission of force, but may also cause damage to the switch and/or the locking structure.

Thus, it is necessary to provide a battery device and a working assembly having the battery device so as to at least partially solve the above problems.

### Summary of the invention

An objective of the present invention is to provide a battery device and a working assembly having the battery device. In the present invention, the transmission of force between an actuating component and a locking component of the battery device is achieved by means of a transmission mechanism, which can satisfy the needs for long-distance transmission of motion between the actuating component and the locking component. In addition, force-exerting and force-receiving components in the force transmission direction can have sufficient rigidity and are not easy to deform and not prone to wobbling, thus ensuring the stability of force transmission and also avoiding damage caused by deformation of the force-exerting and force-receiving components under the action of force. Due to the arrangement of the transmission mechanism, the battery device of the present invention may have a relatively large size, and such a battery device with a relatively large size can also engage with a standard working device.

According to one aspect of the present invention, provided is a battery device for powering a working device. The battery device comprises:
a locking component configured to be capable of extending out of a housing of the battery device or retracting into the housing to engage with or disengage from the working device;
an operation component configured to be capable of being actuated by an operator; and
a transmission mechanism configured to transmit a motion of the operation component to the locking component when the operation component is actuated so as to make the locking component disengage from the working device, wherein the transmission mechanism comprises at least two connecting rods which are sequentially overlapped in a force transmission direction.

In one embodiment, the locking component and the operation component are located at an upper position of the battery device, the locking component has a force-receiving portion facing a bottom side of a top housing wall of the battery device, a force-receiving end of the transmission mechanism abuts against a bottom side of the operation component, and a force-exerting end of the transmission mechanism abuts against a top side of the force-receiving portion of the locking component.

In one embodiment, at least one of the at least two connecting rods comprises a force-receiving arm and a force-exerting arm which are arranged at an obtuse angle to each other, a pivot portion is provided at a connection position between the force-receiving arm and the force-exerting arm, the connecting rod rotates around the pivot portion, optionally, the moment arm of the force-receiving arm is greater than that of the force-exerting arm, and optionally, in a pair of adjacent connecting rods in the at least two connecting rods, the force-exerting arm of the upstream connecting rod has an equal length to the force-receiving arm of the downstream connecting rod.

In one embodiment, in a pair of adjacent connecting rods in the at least two connecting rods, the force-exerting arm of the upstream connecting rod is always in contact with the force-receiving arm of the downstream connecting rod, and preferably, when the operation component is in a non-actuated state, the force-exerting arm of the upstream connecting rod is in surface contact with the force-receiving arm of the downstream connecting rod.

In one embodiment, in a pair of adjacent connecting rods in the at least two connecting rods, an included angle between the force-receiving arm and the force-exerting arm of the upstream connecting rod has an opposite orientation to an included angle between the force-receiving arm and the force-exerting arm of the downstream connecting rod, and the adjacent connecting rods are overlapped within the included angle.

In one embodiment, the battery device further comprises a mounting plate, the mounting plate is provided with a recessed portion corresponding to the pivot portion of the upstream connecting rod, and the pivot portion of the upstream connecting rod is rotatably accommodated in the recessed portion of the mounting plate; and/or
a bottom surface of the top housing wall of the battery device is provided with a recessed portion corresponding to the pivot portion of the downstream connecting rod, and the pivot portion of the downstream connecting rod is rotatably accommodated in the recessed portion of the bottom surface of the top housing wall.

In one embodiment, the at least one connecting rod is provided with a reinforcing rib located at the connection position between the force-receiving arm and the force-exerting arm, the reinforcing rib protrudes toward the inside of the obtuse angle, and preferably, the reinforcing rib comprises a plurality of rib plates arranged at intervals in an extension direction of the pivot portion.

In one embodiment, the battery device comprises elastic members abutting the operation component and/or the transmission mechanism and/or the locking component, and the elastic members are configured to accumulate force when the operation component is pressed, and bias the operation component and/or the transmission mechanism and/or the locking component to return to its original position when the external force disappears.

In one embodiment, the elastic members include a first elastic member which abuts the force-receiving end of the transmission mechanism and/or the bottom side of the operation component, and particularly, the first elastic member is a torsional spring; and/or the elastic members include a second elastic member which abuts the force-exerting end of the transmission mechanism and/or the bottom side of the locking component, and particularly, the second elastic member is a compression spring.

According to another aspect of the present invention, provided is a working assembly comprising a working device and the battery device according to any one of the above solutions, the locking component of the battery device being capable of engaging with or disengaging from the working device.

### Brief description of the drawings

For a better understanding of the above and other objectives, features, advantages and functions of the present invention, reference can be made to the preferred embodiments shown in the accompanying drawings. In the drawings, the like reference numerals denote the like components. It should be understood by those skilled in the art that the drawings are intended to schematically illustrate the preferred embodiments of the present invention and do not impose any limitation to the scope of the present invention, and that the components in the drawings are not drawn to scale.
FIG. 1 is a schematic perspective view of a battery device according to some preferred embodiments of the present invention;
FIG. 2 is a front view of the battery device in FIG. 1, with a part of a top housing of the battery device being removed to show a part of the internal structure of the battery device;
FIG. 3 is an individual enlarged schematic view of a part of the structure in FIG. 2;
FIG. 4A is an individual enlarged schematic view of an operation component, a locking component and a transmission mechanism in FIG. 3;
FIG. 4B is a perspective view of a top view of structures shown in FIG. 4A;
FIG. 5A is an individual enlarged schematic view of the transmission mechanism in FIG. 4A;
FIG. 5B is a perspective view of a top view of the structure shown in FIG. 5A; and
FIG. 5C is a perspective view of a bottom view of the structure shown in FIG. 5A.

### Reference numerals:

100 Battery device
10 Top housing wall
11 Through hole
12 Straight wall
13 Recessed portion of top housing wall
20 Operation component
21 Recess hole
30 Locking component
31 Force-receiving portion
32 Limiting portion
40 Mounting plate
41 Support
42 Recessed portion of mounting plate
50 Transmission mechanism
51 Upstream connecting rod
511 Upstream connecting rod force-receiving arm
512 Upstream connecting rod force-exerting arm
513 Upstream connecting rod pivot portion
514 Upstream connecting rod reinforcing rib
52 Downstream connecting rod
521 Downstream connecting rod force-receiving arm
522 Downstream connecting rod force-exerting arm
523 Downstream connecting rod pivot portion
524 Downstream connecting rod reinforcing rib
61 First elastic member
611 One end of first elastic member
62 Second elastic member

### Detailed description of the invention

The specific embodiments of the present invention are now described in detail with reference to the drawings. Only preferred embodiments of the present invention are described here, and on the basis of the preferred embodiments, those skilled in the art would be able to conceive of other ways of implementing the present invention, which also fall within the scope of the present invention.

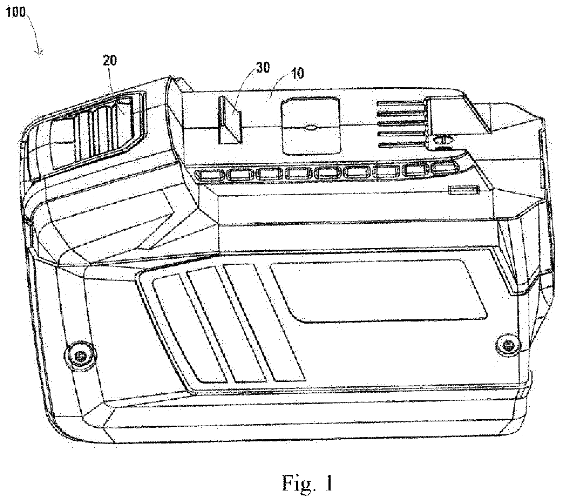

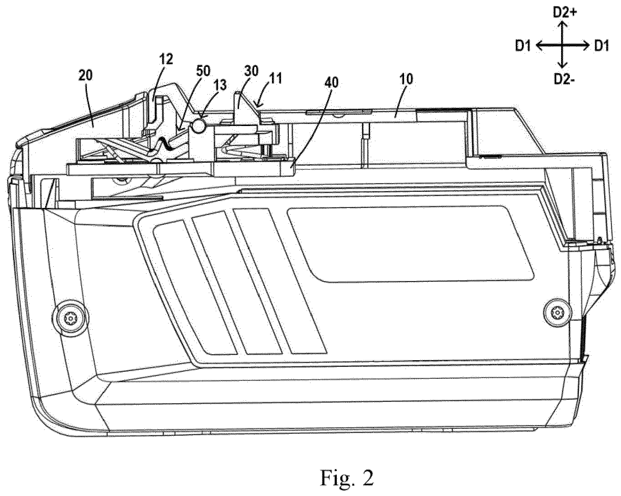

FIGS. 1 to 5C show some preferred embodiments of a battery device according to the present invention. First of all, it should be noted that the direction terms and position terms in the present invention should be construed as relative directions and positions rather than absolute directions and positions. The direction terms and position terms in the present invention can be explained with reference to the exemplary structures shown in FIGS. 1 to 5C. For example, the relative position terms, "top", "top side", "bottom" and "bottom side", mentioned in the present invention can be understood when the battery device has an orientation as shown in FIG. 1, with direction D2+ shown in FIG. 2 being a direction toward a top side, and direction D2- being a direction toward a bottom side. The relative position term "inside" mentioned in the present invention can be construed as a direction approaching the centre of the battery device, and the relative position term "outside" can be construed as a direction away from the centre of the battery device.

The present invention provides a battery device for powering to a working device. In some embodiments, the battery device 100 may have a general outline as shown in FIGS. 1 and 2. The battery device 100 may be, for example, in the rough shape of a cube, which has a length direction of direction D1, a height direction of direction D2, and a width direction of direction D3 (not shown in figures).

The battery device 100 is configured to be capable of engaging with the working device in a releasable manner. The battery device 100 may comprise a locking component 30. The locking component 30 is configured to be movable relative to a housing of the battery device 100 to engage with or disengage from the working device. The battery device 100 is further provided with an operation component 20, which is used to control the locking structure and is configured to be capable of being actuated by an operator to move relative to the housing of the battery device 100.

In some embodiments, both the operation component 20 and the locking component 30 are roughly located at an upper portion of the working device and can move relative to a top housing wall 10 of the working device. The locking component 30 can extend upward relative to the top housing wall 10 of the battery device 100 to engage and lock with the working device. The top housing wall 10 is provided with a through hole 11 through which the locking component 30 extends out. For example, the locking component 30 can retract downward relative to the top housing wall 10, and when an operator correctly aligns the working device to the battery device 100, the locking component 30 extends upward relative to the top housing wall 10 to engage and lock with the working device. For unlocking, the operator may press the operation component 20 to enable the operation component 20 to drive the locking component 30 to retract downward relative to the top housing wall 10 of the battery device 100 to disengage from the working device. In some embodiments, the operation component 20 is provided with an upwardly formed recess hole 21 to receive a downwardly extending straight wall 12 arranged on the top housing wall 10 of the battery device 100. The cooperation between the recess hole 21 and the straight wall 12 can also have the function of guiding the operation component 20 to move up and down.

A transmission structure between the operation component 20 and the locking component 30 is shown in FIG. 2. Referring to FIG. 2, in some embodiments, the operation component 20 and the locking component 30 are spaced apart from each other and are not in direct contact with each other, and the force transmission is achieved by means of a transmission mechanism 50. Such an arrangement can achieve relatively large distance of force transmission, and is especially suitable for the battery device 100 with a relatively large size, such that the battery device 100 with a relatively large size can also engage with the working device having a standard size.

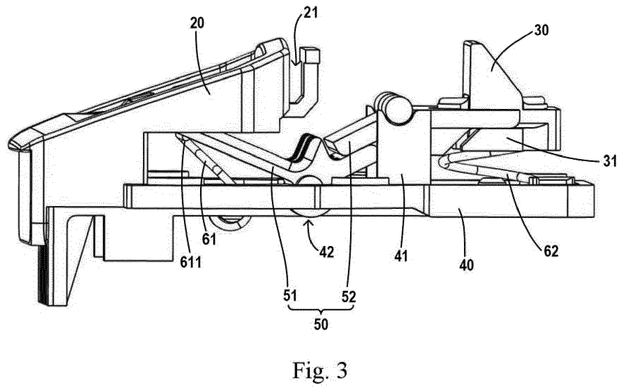

Referring to FIGS. 2 and 3, the transmission mechanism 50 comprises at least two connecting rods, for example, an upstream connecting rod 51 and a downstream connecting rod 52, sequentially overlapped to form a transmission system, the upstream connecting rod 51 being located upstream of the downstream connecting rod 52 in the force transmission direction. A force-receiving end of the transmission mechanism 50 (i.e., a force-receiving end of the upstream connecting rod 51) abuts against a bottom side of the operation component 20. The locking component 30 has a force-receiving portion 31 facing the top housing wall 10 of the battery device 100, and a force-exerting end of the transmission mechanism 50 (i.e., a force-exerting end of the downstream connecting rod 52) abuts against a top side of the force-receiving portion 31 of the locking component 30. Such an arrangement of the upstream connecting rod 51 and the downstream connecting rod 52 can ensure that the locking component 30 will receive a downward pressing force when the operation component 20 is subjected to a downward pressing force.

Furthermore, in some embodiments, each connecting rod of the transmission mechanism 50 forms a lever structure that pivots around a pivot axis. Preferably, the connecting rod may comprise a force-receiving arm and a force-exerting arm which are arranged at an obtuse angle to each other, a pivot portion is provided at the connection position between the force-receiving arm and the force-exerting arm, and the connecting rod rotates around the pivot portion. The obtuse angle may be 100 degrees to 170 degrees, preferably 120 degrees to 150 degrees, and more preferably 140 degrees.

In some embodiments, the upstream connecting rod 51 may comprise an upstream connecting rod force-receiving arm 511 and an upstream connecting rod force-exerting arm 512 which are arranged at an obtuse angle to each other, an upstream connecting rod pivot portion 513 is provided at the connection position between the upstream connecting rod force-receiving arm 511 and the upstream connecting rod force-exerting arm 512, and the upstream connecting rod 51 rotates around the pivot portion 513. The upstream connecting rod force-receiving arm 511 is configured to receive force from the operation component 20, and the upstream connecting rod force-exerting arm 512 is configured to exert force to the downstream connecting rod 52. The downstream connecting rod 52 may comprise a downstream connecting rod force-receiving arm 521 and a downstream connecting rod force-exerting arm 522 which are arranged at an obtuse angle to each other, a pivot portion 523 is arranged at the connection position between the downstream connecting rod force-receiving arm 521 and the downstream connecting rod force-exerting arm 522, and the connecting rod rotates around the pivot portion 523. The downstream connecting rod force-receiving arm 521 is configured to receive force from the upstream connecting rod 51, and the downstream connecting rod force-exerting arm 522 is configured to exert force to the locking component 30.

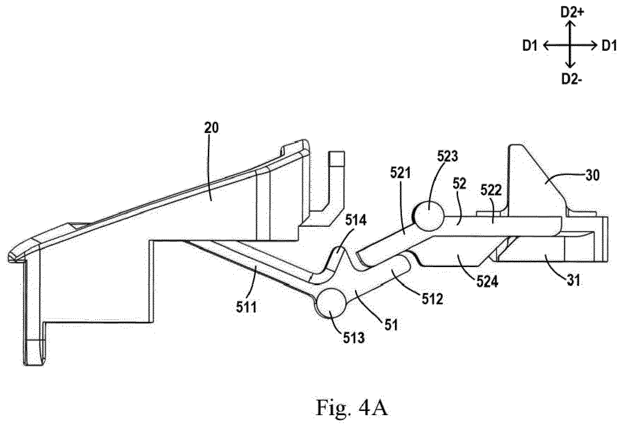

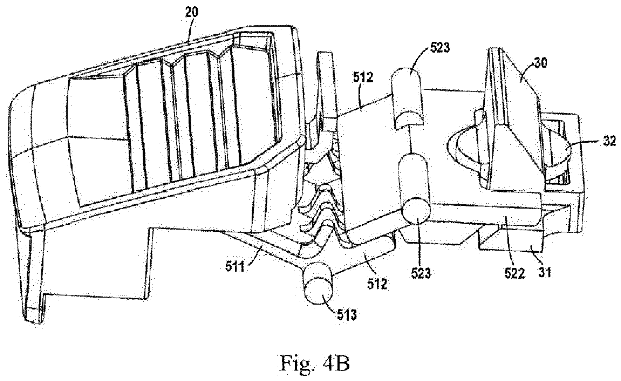

Referring to FIGS. 4A and 4B, in some embodiments, the force-receiving portion 31 of the locking component 30 is a pair of wing plates extending out in a third direction D3, and the downstream connecting rod force-exerting arm 522 of the downstream connecting rod 52 correspondingly presses against top sides of the pair of wing plates. That is, the downstream connecting rod force-exerting arm 522 is located on two sides of a main body of the locking component 30 in the third direction. It can be understood that those skilled in the art would conceive of other configurations without departing from the scope of the present invention, as long as the downstream connecting rod force-exerting arm can exert force to the locking component 30. For example, the locking component 30 may have a groove, and the downstream connecting rod force-exerting arm 522 may cooperate with the groove to act on the locking component 30.

In some embodiments, an included angle between the force-receiving arm 511 and the force-exerting arm 512 of the upstream connecting rod 51 has an opening that faces the top side, an included angle between the force-receiving arm 521 and the force-exerting arm 522 of the downstream connecting rod 52 has an opening that faces the bottom side, and the force-exerting arm 512 of the upstream connecting rod 51 is located at a bottom side of the force-receiving arm 521 of the downstream connecting rod 52, that is, the adjacent connecting rods are overlapped within the included angle. Such an arrangement of the upstream connecting rod 51 and the downstream connecting rod 52 can ensure the stable transmission of force, and specifically enable the upstream connecting rod 51 and the downstream connecting rod 52 to still form a stable force transmission relationship therebetween when pivoting through a large range of angle (if both the upstream connecting rod 51 and the downstream connecting rod 52 are formed into a V-shaped structure having an upward opening, they are easy to disengage from each other during the pivoting process). The force-exerting arm 512 of the upstream connecting rod 51 and the force-receiving arm 521 of the downstream connecting rod 52 are always in contact with each other and will not be separated from each other.

Referring to FIGS. 2 and 3, in some embodiments, the battery device 100 is further provided with a mounting plate 40 located at a bottom side of the upstream connecting rod 51, the mounting plate 40 is provided with a recessed portion 42 corresponding to the pivot portion of the upstream connecting rod 51, and the pivot portion 513 of the upstream connecting rod 51 is rotatably accommodated in the recessed portion 42 of the mounting plate 40. Referring to FIG. 2, a bottom surface of the top housing wall 10 of the battery device 100 is provided with a recessed portion 13 corresponding to the pivot portion of the downstream connecting rod 52, and the pivot portion 523 of the downstream connecting rod 52 is rotatably accommodated in the recessed portion 13 of an inner surface of the top housing wall. The mounting plate 40 may further be provided with a support 41 extending toward the top side, and the support 41 may also have a recessed structure to correspondingly support a bottom side of the downstream connecting rod pivot portion 523.

In some embodiments, the battery device 100 comprises elastic members abutting the operation component 20 and/or the transmission mechanism 50 and/or the locking component 30, and the elastic members are configured to accumulate force when the operation component 20 is pressed, and bias the operation component 20 and/or the transmission mechanism 50 and/or the locking component 30 to return to its original position when the external force disappears. For example, referring to FIG. 3, the elastic members include a first elastic member 61, for example, a torsional spring. One end 611 of the first elastic member 61 abuts the bottom sides of force-receiving ends of the operation component 20 and the transmission mechanism 50, and the other end of the first elastic member 61 is fixed to the mounting plate 40, for example. The elastic members may further include, for example, a second elastic member 62 such as a compression spring. The top end of the second elastic member 62 abuts the bottom sides of the force-exerting ends of the locking component 30 and the transmission mechanism 50, and the bottom end of the second elastic member 62 abuts against the mounting plate 40. The first elastic member 61 and the second elastic member 62 may be arranged in an alternative way. Other elastic members may also be additionally provided as required, for example, a corresponding torsional spring or a compression spring may be provided for each pivoting connecting rod.

The operation component 20 and the locking component 30 shown in FIGS. 2 and 3 are both located at their original positions where they are not actuated. At this moment, both the first elastic member 61 and the second elastic member 62 may be in an original state, i.e., a state where no force is accumulated. Alternatively, at this moment, the first elastic member 61 and the second elastic member 62 may be in a state where same are slightly deformed and force is slightly accumulated, such that the locking component 30 can be pushed upward even in a natural state to ensure stable engagement with the working device. Optionally, the locking component 30 further has a limiting structure 32 (see FIG. 4B). The limiting structure 32 may be attached to the bottom side of the top housing wall 10 of the battery device 100 so as to prevent the locking component 30 from being released upward under the action of elastic force. Preferably, when the operation component 20 is in a state not receiving force (e.g., the state as shown in FIGS. 2 to 4A), the force-exerting arm 522 of the most downstream connecting rod, for example, the downstream connecting rod 52, in the at least two connecting rods is attached to a bottom side face of the top housing wall 10 of the working device in a surface contact manner, so as to ensure that the transmission mechanism 50 is not prone to wobbling in the natural state.

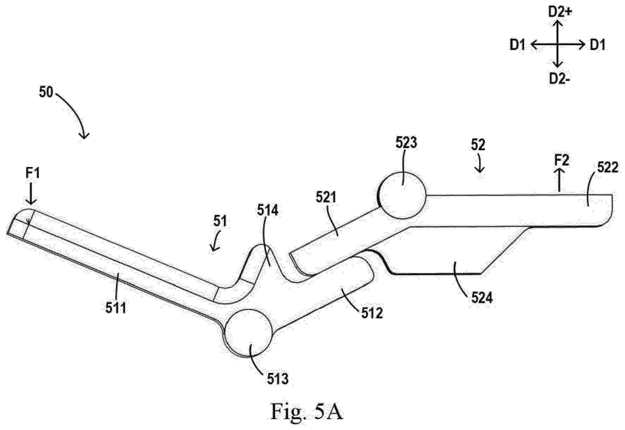

Referring to the individual schematic views of the transmission mechanism 50 in FIGS. 5A to 5C, the connecting rods of the transmission mechanism 50 may also be arranged in various preferred manners.

In some embodiments, in consideration of saving effort for the operator, based on the lever principle, the moment arm of the force-receiving arm of at least one connecting rod may be greater than the moment arm of the force-exerting arm, so that the output force of the connecting rod is greater than the input force. For example, in the structure shown in FIG. 5A, the moment arm of the upstream connecting rod force-receiving arm 511 of the upstream connecting rod 51 is greater than the moment arm of the upstream connecting rod force-exerting arm 512, and the downstream connecting rod 52 is not arranged accordingly. In a more preferred embodiment, the downstream connecting rod 52 may also be arranged such that the moment arm of the downstream connecting rod force-receiving arm 521 thereof is greater than the moment arm of the downstream connecting rod force-exerting arm 522.

In some embodiments, further referring to FIG. 5A, the force-exerting arm 512 of the upstream connecting rod 51 has an approximately equal length to the force-receiving arm 521 of the downstream connecting rod 52, such that the force-exerting arm 512 of the upstream connecting rod 51 and the force-receiving arm 521 of the downstream connecting rod 52 can be in continuous contact with each other during the process of pivoting through a large range of angle. Preferably, when the operation component is in a non-actuated state, the force-exerting arm 512 of the upstream connecting rod 51 is in surface contact with the force-receiving arm 521 of the downstream connecting rod 52, so as to improve the stability of transmission of initial force.

It should be noted that the value of the moment arm of the force-receiving arm mentioned in the present invention is not necessarily equal to the length of the force-receiving arm, the moment arm of the force-receiving arm refers to the length of the projection of the force-receiving arm in a direction perpendicular to the input force. For example, referring to FIG. 5A, the value of the moment arm of the upstream connecting rod force-receiving arm 511 is the length of the projection of the upstream connecting rod force-receiving arm 511 in a direction perpendicular to an input force F1, i.e., the length of the projection of the upstream connecting rod force-receiving arm 511 in the direction D 1. Similarly, the value of the moment arm of the force-exerting arm is not necessarily equal to the length of the force-exerting arm, and the moment arm of the force-exerting arm refers to the length of the projection of the force-exerting arm in a direction perpendicular to the output force. For example, referring to FIG. 5A, the value of the moment arm of the downstream connecting rod force-exerting arm 522 is the length of the projection of the downstream connecting rod force-exerting arm 522 in a direction perpendicular to an output force F2, and in FIG. 5A, since the downstream connecting rod force-exerting arm 522 roughly extends in the direction D1, the moment arm of the downstream connecting rod force-exerting arm 522 is approximately equal to the length of the downstream connecting rod force-exerting arm 522. In some embodiments, in a natural state and/or in a state where the battery device 100 has engaged with a working tool, the angle between the upstream connecting rod force-receiving arm 511 and the horizontal plane (the plane parallel to D1-D3) is approximately 0 degrees to 30 degrees, preferably approximately 5 degrees. In this way, the arm length of the upstream connecting rod force-receiving arm 511 may be as approximate as possible to the actual length of the moment arm. In this way, the operator can operatively control the locking component with less effort.

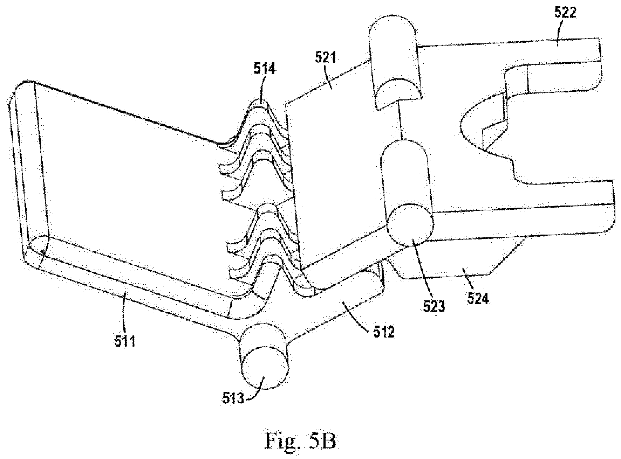

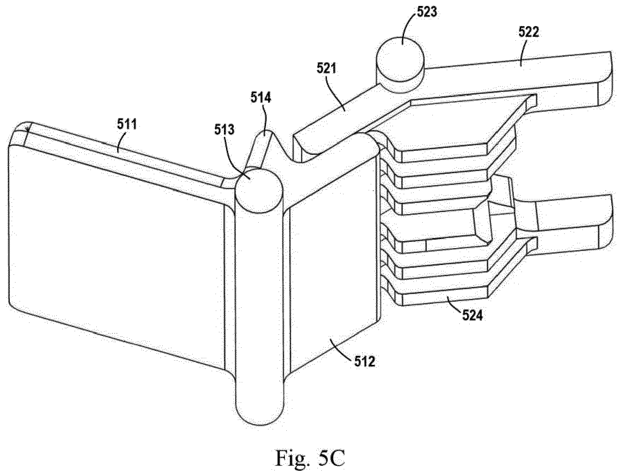

Referring to FIG. 5B, in some embodiments, the upstream connecting rod 51 is provided with an upstream connecting rod reinforcing rib 514 located at the connection position between the upstream connecting rod force-receiving arm 511 and the upstream connecting rod force-exerting arm 512, and the upstream connecting rod reinforcing rib 514 has an opposite protruding direction to the upstream connecting rod pivot portion 513, that is, the reinforcing rib 514 protrudes toward the inside of the obtuse angle formed by the upstream connecting rod force-receiving arm 511 and the upstream connecting rod force-exerting arm 512. Preferably, the upstream connecting rod reinforcing rib 514 comprises a plurality of rib plates arranged at intervals in the extension direction (e.g., the direction D3) of the upstream connecting rod pivot portion 513. Similarly, referring to FIG. 5C, the downstream connecting rod 52 is provided with a downstream connecting rod reinforcing rib 524 located at the connection position between the downstream connecting rod force-receiving arm 521 and the downstream connecting rod force-exerting arm 522, and the downstream connecting rod reinforcing rib 524 has an opposite protruding direction to the downstream connecting rod pivot portion 523. Preferably, the downstream connecting rod reinforcing rib 524 comprises a plurality of rib plates arranged at intervals in the extension direction of the downstream connecting rod pivot portion 523. The arrangement of the reinforcing ribs can prevent the connecting rods from being broken at the connections between the force-receiving arms and the force-exerting arms during long-term use, so as to prolong the service life of the transmission mechanism 50.

It should be noted that the embodiments mentioned above only exemplarily describe some preferred embodiments according to the present invention, and the present invention may also have some other preferred embodiments. For example, there may be some connecting rods. The connecting rod is in the form of a flat plate, that is, the force-receiving arm and the force-exerting arm of the connecting rod may roughly extend along the same plane. For example, in some embodiments, more sequentially connected connecting rods, preferably an even number of connecting rods, such as four or six connecting rods, may be provided. For example, the operation component and the locking component may be positioned on the side face of the battery device instead of the top face, then the "top housing wall" mentioned above may be replaced with a "side housing wall". For another example, the locking component may perform other motions (such as translation and rotation) relative to the housing of the battery device so as to engage with and disengage from the working device, and the operation component may also move upward or rotate in response to an actuation operation. For another example, when the operator actuates the operation component, the operation component may have the same movement direction as the locking component.

The present invention further provides a working assembly. A specific embodiment of the working assembly may comprise a working device and the battery device according to the above embodiments, the battery device being engaged in a releasable manner with the working device for powering the working device. The working device may be, for example, an electric machine such as a lawn mower or a snowplough.

In the present invention, the transmission of force between an actuating component and a locking component of the battery device is achieved by means of a transmission mechanism, which can satisfy the needs for long-distance transmission of motion between the actuating component and the locking component. In addition, during the process of force transmission, the force-exerting and force-receiving components can have sufficient rigidity and are not easy to deform and not prone to wobbling, thus ensuring the stability of force transmission and also avoiding damage caused by deformation of the force-exerting and force-receiving components under the action of force. Due to the arrangement of the transmission mechanism, the battery device of the present invention may have a relatively large size, and such a battery device with a relatively large size can also engage with a standard working device.

The foregoing description of various embodiments of the present invention is provided for descriptive purposes for a person of ordinary skill in the relevant art. It is not intended to exclude or limit the present invention to a single embodiment disclosed. As described above, various substitutions and variations of the present invention will be apparent to those of ordinary skill in the art. Thus, although some alternative embodiments have been specifically described, other embodiments will be apparent or relatively readily developed by those of ordinary skill in the art. The present invention is intended to include all alternatives, modifications and variations of the present invention described herein, and the other embodiments which fall within the spirit and scope of the present invention described above.

## Claims

1. Battery device (100) for powering a working device, **characterized in that** the battery device comprises:
a locking component (30) configured to be capable of extending out of a housing of the battery device or retracting into the housing to engage with or disengage from the working device;
an operation component (20) configured to be capable of being actuated by an operator; and
a transmission mechanism (50) configured to transmit a motion of the operation component to the locking component when the operation component is actuated so as to make the locking component disengage from the working device, wherein the transmission mechanism comprises at least two connecting rods (51, 52) which are sequentially overlapped in a force transmission direction.

2. Battery device according to Claim 1, **characterized in that** the locking component (30) and the operation component (20) are located at an upper position of the battery device, the locking component has a force-receiving portion (31) facing a bottom surface of a top housing wall (10) of the battery device, a force-receiving end of the transmission mechanism abuts against a bottom side of the operation component (20), and a force-exerting end of the transmission mechanism abuts against a top side of the force-receiving portion (31) of the locking component.

3. Battery device according to Claim 1 or 2, **characterized in that** at least one of the at least two connecting rods (51, 52) comprises a force-receiving arm (511, 521) and a force-exerting arm (512, 522) which are arranged at an obtuse angle to each other, a pivot portion (513, 523) is provided at a connection position between the force-receiving arm and the force-exerting arm, the connecting rod rotates around the pivot portion, optionally, the moment arm of the force-receiving arm is greater than that of the force-exerting arm, and optionally, in a pair of adjacent connecting rods in the at least two connecting rods, the force-exerting arm (512) of the upstream connecting rod (51) has an approximately equal length to the force-receiving arm (521) of the downstream connecting rod (52).

4. Battery device according to any one of Claims 1-3, **characterized in that** in a pair of adjacent connecting rods in the at least two connecting rods, the force-exerting arm (512) of the upstream connecting rod (51) is always in contact with the force-receiving arm (521) of the downstream connecting rod (52), and preferably, when the operation component is in a non-actuated state, the force-exerting arm (512) of the upstream connecting rod (51) is in surface contact with the force-receiving arm (521) of the downstream connecting rod (52).

5. Battery device according to Claim 3 or 4, **characterized in that** in a pair of adjacent connecting rods in the at least two connecting rods, an included angle between the force-receiving arm (511) and the force-exerting arm (512) of the upstream connecting rod (51) has an opposite orientation to an included angle between the force-receiving arm (521) and the force-exerting arm (522) of the downstream connecting rod (52), and the adjacent connecting rods are overlapped within the included angle.

6. Battery device according to any one of Claims 3-5, **characterized in that** the battery device further comprises a mounting plate (40), the mounting plate is provided with a recessed portion (42) corresponding to the pivot portion (513) of the upstream connecting rod (51), and the pivot portion of the upstream connecting rod is rotatably accommodated in the recessed portion of the mounting plate; and/or
the bottom surface of the top housing wall (10) of the battery device is provided with a recessed portion (13) corresponding to the pivot portion (523) of the downstream connecting rod (52), and the pivot portion of the downstream connecting rod is rotatably accommodated in the recessed portion of the bottom surface of the top housing wall.

7. Battery device according to any one of Claims 3-6, **characterized in that** the at least one connecting rod is provided with a reinforcing rib (514, 524) located at the connection position between the force-receiving arm and the force-exerting arm, the reinforcing rib protrudes toward the inside of the obtuse angle, and preferably, the reinforcing rib comprises a plurality of rib plates arranged at intervals in an extension direction of the pivot portion.

8. Battery device according to any one of Claims 1-7, **characterized in that** the battery device comprises elastic members (61, 62) abutting the operation component and/or the transmission mechanism and/or the locking component, and the elastic members are configured to accumulate force when the operation component is pressed, and bias the operation component and/or the transmission mechanism and/or the locking component to return to its original position when the external force disappears.

9. Battery device according to Claim 8, **characterized in that** the elastic members include a first elastic member (61) which abuts the force-receiving end of the transmission mechanism and/or the bottom side of the operation component, and particularly, the first elastic member is a torsional spring; and/or the elastic members include a second elastic member (62) which abuts the force-exerting end of the transmission mechanism and/or a bottom side of the locking component, and particularly, the second elastic member is a compression spring.

10. Working assembly, **characterized in that** the working assembly comprises a working device and the battery device according to any one of Claims 1-9, the locking component of the battery device being capable of engaging with or disengaging from the working device.
